# EUROPEAN PATENT APPLICATION

(11) **EP 1 724 962 A2**
(43) Date of publication of application: **22.11.2006**
(21) Application number: 05023142.2
(22) Date of filing: 24.10.2005
(51) Int. Cl.: H04L 9/08

(54) **Data processing apparatus**

(30) Priority: 08.02.2005 JP 2005031914
(71) Applicant: KABUSHIKI KAISHA TOSHIBA, Tokyo 105-8001 (JP)
(72) Inventor: Ohno, Katsuya, Minato-ku Tokyo 105-8001 (JP)
(74) Representative: HOFFMANN EITLE

(57) **Abstract**

Upon encrypting and storing data C on a recording medium, data B corresponding to data C is embedded in a padding area together with parity data for data B and C as padding data, and data B and parity data are encrypted in correspondence with data C.

## Description

The present invention relates to a data processing apparatus, which handle data whose secrecy must be maintained.

A data encryption technique is applied to various data processing apparatuses which handle data whose secrecy must be maintained. For example, when information is recorded on a recording medium such as an optical disk, it is required to record information after it is encrypted. In a copyright protection method, content as a work are encrypted using an encryption key to obtain encrypted content, and the encryption key used in encryption is encrypted using another encryption key to obtain an encrypted key so as to keep it secret. The encrypted key and encrypted content are recorded on a recording medium together, thus preventing an unauthorized copy.

In such data encryption technique, upon encrypting and storing data, the data must be adjusted to a block size of an encryption algorithm. Conventionally, a padding area used to match data with the block size of the encryption algorithm is embedded with padding data of a predetermined bit sequence (e.g., all zeros).

As a conventional encryption technique, as disclosed in, e.g., Japanese Pat. Appln. KOKAI Publication No. 11-112479, there is an encryption apparatus which encrypts data by associating an error correction code to a data block of data to be kept secret while maintaining integrity of an error correction code word.

However, such encryption technique requires complicated processing such as processing for generating a data block that includes a random number having the same size as that of raw data, processing for appending an error correction code using the same error correction code generation method as that of the raw data to the random data block, and the like, and a data size to be recorded increases considerably.

The present invention has been made in consideration of the above situation, and has as its object to provide a data processing apparatus, which can efficiently execute encryption processing and decryption processing.

According to an embodiment of the present invention, a data processing apparatus which handles a data set including first data, at least one second data calculated from the first data, and third data having an one-to-one correspondence with the second data, comprises: a parity generation unit configured to generate parity data for the second and third data; a data set generation unit configured to generate an encrypted data set by encrypting the third data together with the second data and the parity data generated by the parity generation unit using a predetermined encryption algorithm; and a recording unit configured to record the encrypted data set generated by the data set generation unit.

According to the present invention, encryption processing and decryption processing can be efficiently executed by taking the aforementioned steps.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the structure of a data set according to an embodiment of the present invention;
FIG. 2 is a view showing an example of an encrypted data set according to the embodiment of the present invention;
FIG. 3 is a view showing another example of an encrypted data set according to the embodiment of the present invention;
FIG. 4 is a block diagram showing a data set encryption processor and its peripheral components of a data processing apparatus according to the embodiment of the present invention;
FIG. 5 is a flowchart showing the processing sequence of the data processing apparatus shown in FIG. 4;
FIG. 6 is a block diagram showing a data set decryption processor and its peripheral components of a data processing apparatus according to the embodiment of the present invention;
FIG. 7 is a flowchart showing the processing sequence of the data processing apparatus shown in FIG. 6;
FIG. 8 is a block diagram showing an example of the arrangement of a data recording apparatus and data playback apparatus according to the embodiment of the present invention; and
FIG. 9 is a flowchart showing the processing sequence of the data recording apparatus and data playback apparatus shown in FIG. 8.

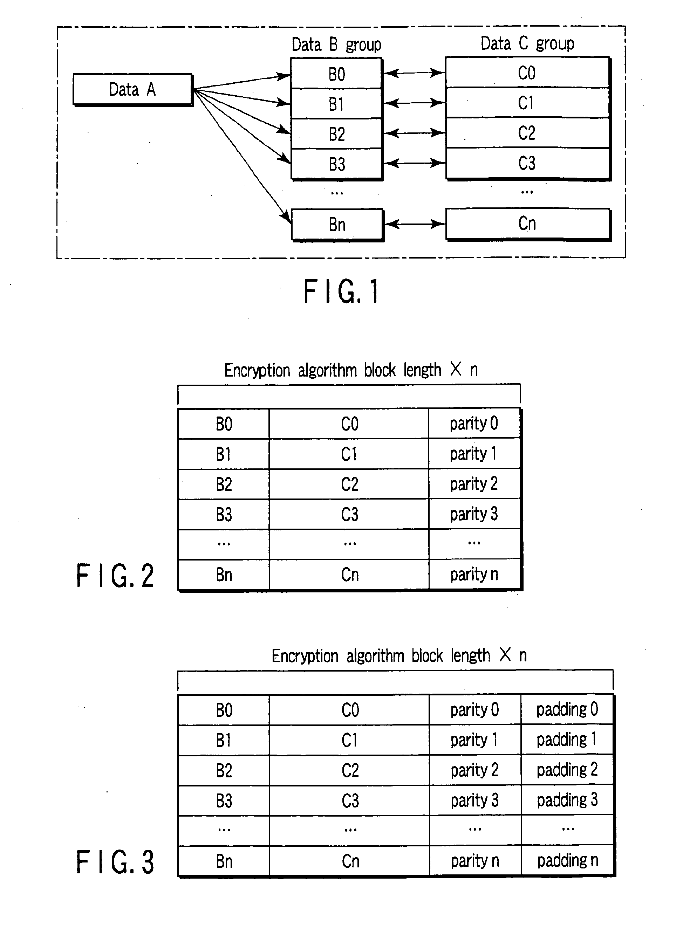

FIG. 1 shows the structure of a data set to be handled by the present invention. This data set includes first data, at least one second data calculated based on this first data, and third data which has an one-to-one correspondence with the second data. In FIG. 1, the first data is indicated by data A, the second data is indicated by data B, and the third data is indicated by data C. In the structure shown in FIG. 1, (n+1) data B (B0, B1, ..., Bn) are calculated from one data A as a data B group. Unique data C (C0, C1, ..., Cn) are provided in correspondence with the data (B0, B1, ..., Bn) of this data B group. These (n+1) data C (C0, C1, ..., Cn) are key data used to encrypt or decrypt predetermined data (e.g., audiovisual content data and the like) which is to be encrypted and must be kept secret. Data B (B0, B1, ..., Bn) indicate the coordinates of corresponding data C (C0, C1, ..., Cn), and are required when data C are used.

In the data sets with the data structure shown in FIG. 1, data A (one or a plurality of data) and data (C0, C1, ..., Cn) of a data C group corresponding to this data are saved in advance as, e.g., a management data file at a predetermined storage location on a system. Or these data are externally given and are saved at the predetermined storage location. The data (B0, B1, ..., Bn) of the data B group are acquired by applying arithmetic processing to the data A.

Upon encrypting the respective data (C0, C1, ..., Cn) of the data C group and storing them on a predetermined recording medium, their data size must be adjusted to a block size of an encryption algorithm. As padding data used in size adjustment, data B is embedded in a padding area as padding data together with parity data in place of normal padding data (e.g., data of all zeros or the like), and data B and parity data embedded in the padding area are encrypted in correspondence with data C. The size of the encrypted data set corresponds to an integer multiple of the block size of the encryption algorithm.

FIGS. 2 and 3 show examples of the data structures of the data sets which are obtained by embedding data B and parity data corresponding to data B and C in the padding area. FIG. 2 shows an example of the structure of the data set when the data size of encrypted data B and parity data matches the padding area size. FIG. 3 shows an example of the structure of the data set when data B and parity data are partially embedded in the padding area in place of known padding data (all zeros). Note that the parity data provided to this data set may be parity data generated for data (B + C) as a combination of data B and C, or may be parity data separately generated for data B and C.

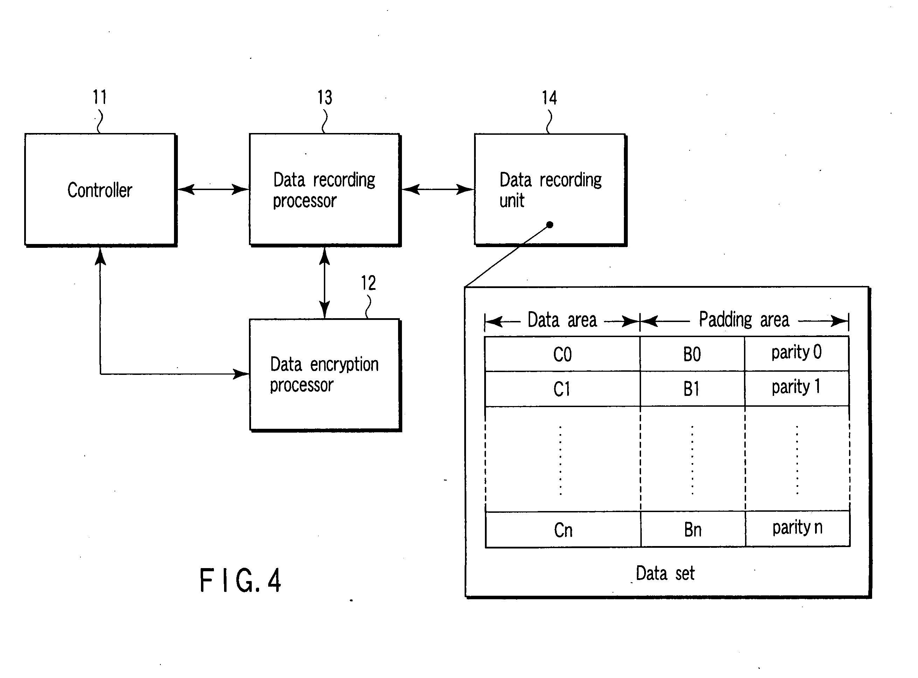

FIG. 4 shows an example of the arrangement of a data processing apparatus which generates an encrypted data set together with the corresponding data C by embedding data B and parity data for data B and C in each padding area. The data processing apparatus shown in FIG. 4 comprises a controller 11, data encryption processor 12, data recording processor 13, and data recording unit 14. The controller 11 controls the overall apparatus. The data encryption processor 12 executes processing for encrypting a data set including the aforementioned data B and C, and parity data generated for data B and C under the control of the controller 11. The data recording processor 13 executes processing for recording the data set encrypted by the data encryption processor 12 in the data recording unit 14 under the control of the controller 11.

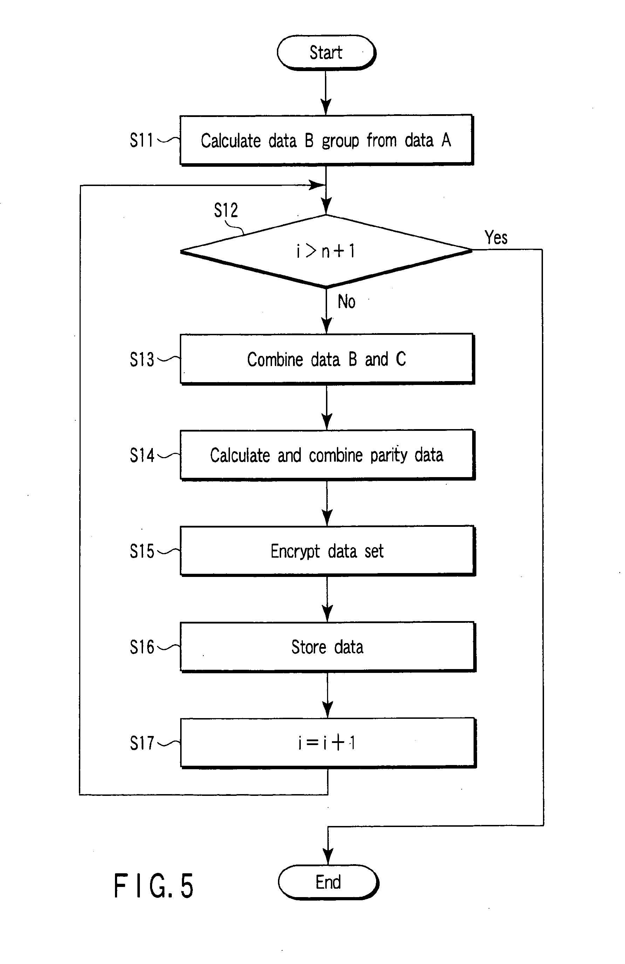

FIG. 5 shows the processing sequence of this data processing apparatus. The controller 11 acquires data A and a data C group corresponding to data A as elements of the data set shown in FIG. 1 from a predetermined data storage unit (e.g., a management data file or the like prepared in advance) on the system. Furthermore, the controller 11 calculates data (B0, B1, ..., Bn) of a data B group corresponding to data (C0, C1, ..., Cn) of the data C group from the acquired data A (step S11).

For each of the calculated data (B0, B1, ..., Bn) of the data B group, data B of interest and data C corresponding to the data B of interest are combined (step S13), and parity data is calculated for the combined data B and C and is appended to the corresponding data B and C (step S14). The controller 11 passes one data set including data B and C and parity data to the data encryption processor 12. The data encryption processor 12 encrypts one data set received from the controller 11 in accordance with a predetermined encryption algorithm, and inserts the encrypted data C in a data area. The data encryption processor 12 also inserts the encrypted data B and parity data in a padding area. In this way, a data set is generated to have a size corresponding to an integer multiple of the block size of the encryption algorithm. The data encryption processor 12 passes the encrypted data set to the data recording processor 13 (step S15). The data recording processor 13 records the data set received from the data encryption processor 12 in the data recording unit 14 under the control of the controller 11 (step S16). By repeating this processing to each of the data (B0, B1, ..., Bn) of the data B group (steps S12 and S17), (n+1) encrypted data sets shown in FIG. 2 or 3 are recorded in the data recording unit 14.

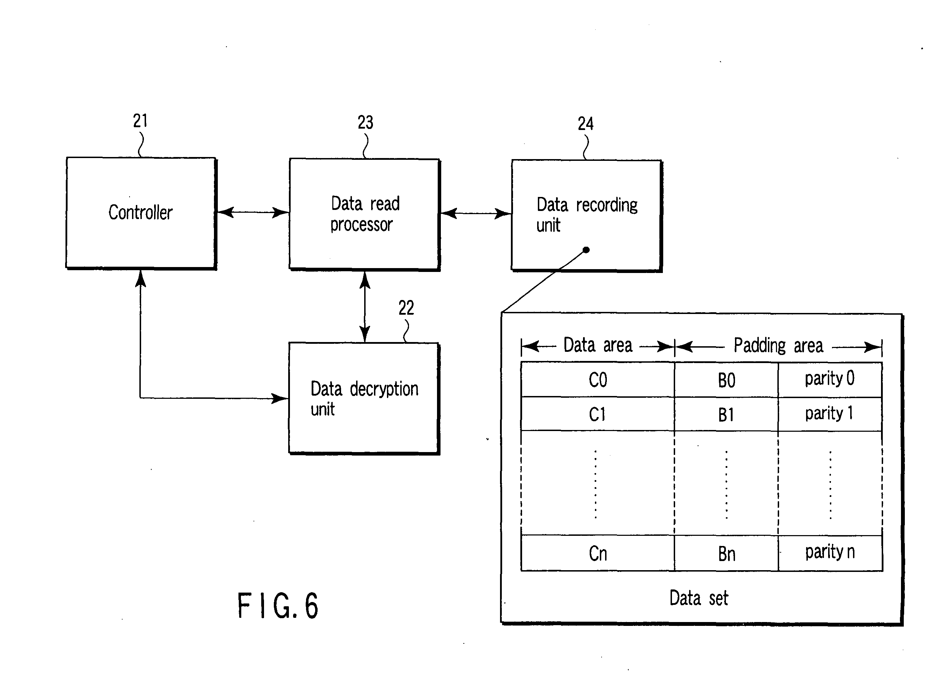

FIG. 6 shows an example of the arrangement of a data processing apparatus which decrypts the encrypted data sets shown in FIG. 2 or 3, and uses decrypted data B and C in subsequent processing. The data processing apparatus shown in FIG. 6 comprises a controller 21, data decryption unit 22, data read processor 23, and data recording unit 24. The data recording unit 24 stores encrypted data sets with the structure shown in FIG. 2 or 3. The controller 21 controls the overall apparatus. The data read processor 23 reads an encrypted data set from the data recording unit 24 under the control of the controller 21. The data decryption unit 22 decrypts the data set read by the data read processor 23 under the control of the controller 21.

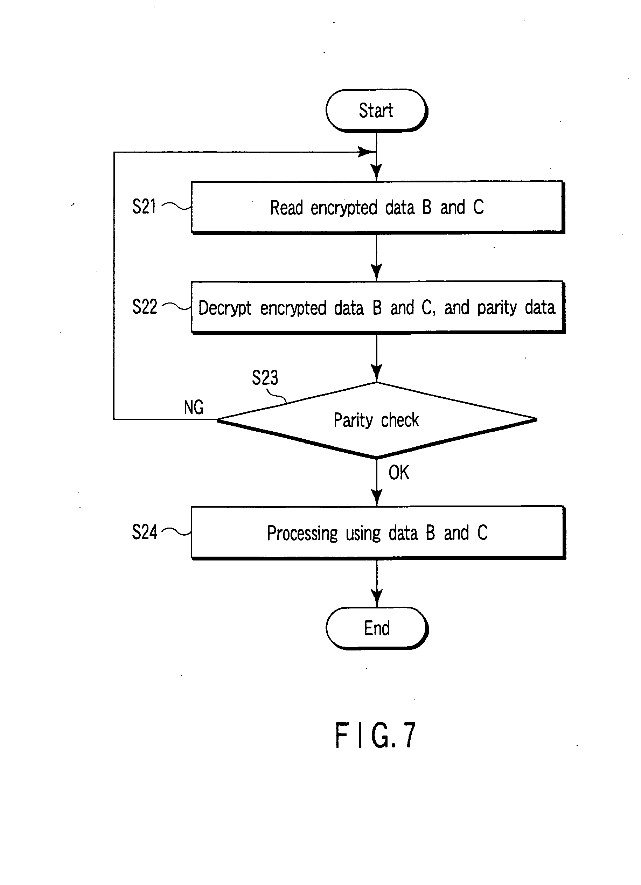

FIG. 7 shows the processing sequence of this data processing apparatus. The data read processor 23 reads one of (n+1) data sets recorded in the data recording unit 24 under the control of the controller 21, and passes the read data set to the data decryption unit 22 (step S21). The data decryption unit 22 decrypts the data set received from the data read processor 23 under the control of the controller 21 (step S22), and applies parity check processing to the decrypted data B and C using the decrypted parity data (step S23). If the authenticity of the decrypted data B and C is confirmed, i.e., if it is confirmed that data B and C are normally read and decrypted, data B and C are used in subsequent processing (step S24). For example, when data B matches a predetermined decryption condition, key data used to encrypt or decrypt predetermined data (e.g., content data) to be handled by the apparatus is generated using data C (decrypted simultaneously with data B) corresponding to data B, and encryption or decryption processing is executed using this key data. In the aforementioned processing (step S24), data B which indicates the coordinates of data C can be obtained simultaneously with decryption of data C without being calculated from data A, and the parity check processing can be applied to data B and C together. In the aforementioned processing (step S24), if data B does not match the predetermined decryption condition, the next one data set is read from the (n+1) data sets recorded in the data recording unit 24, and undergoes the same processing. If a parity error has occurred in the parity check processing (step S23), for example, the read and parity check processes of data B and C are executed again. If a parity error has occurred again, data B and C are handled as invalid data.

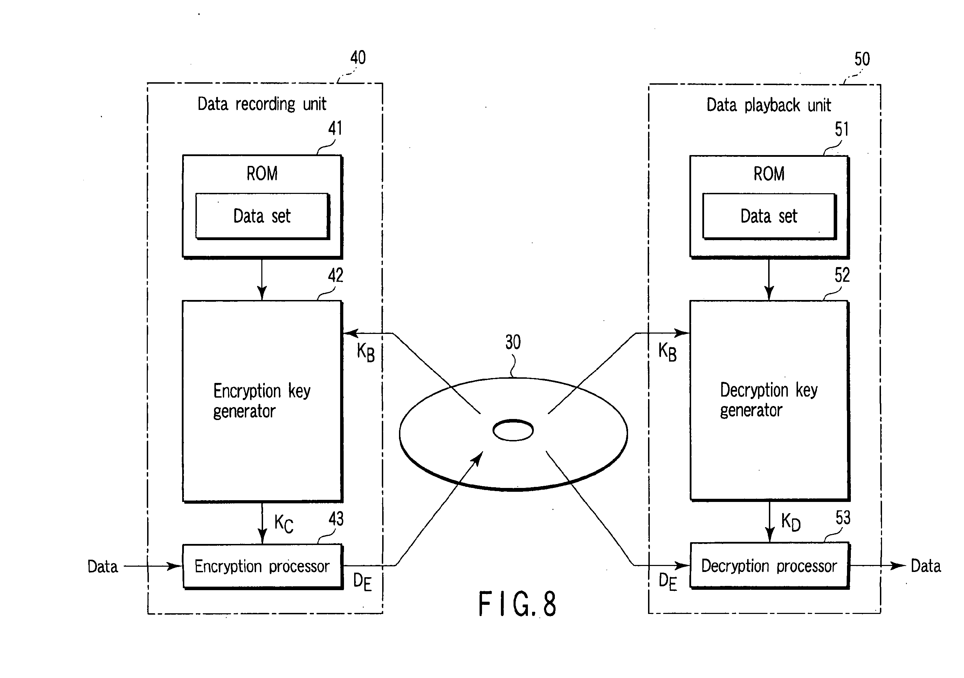

FIG. 8 shows an example of the arrangement of a data recording apparatus and data playback apparatus using the data sets with the data structure shown in FIG. 2 or 3. Note that a data recording unit 40 as a building component of the data recording apparatus and a data playback unit 50 as a building component of the data playback apparatus are illustrated on the identical figure. However, the data recording apparatus need only be provided with the data recording unit 40, and the data playback apparatus need only be provided with the data playback unit 50.

The data recording unit 40 has a ROM 41 which stores data sets with the data structure shown in FIG. 2 or 3, an encryption key generator 42 which generates an encryption key using each data set stored in the ROM 41, and an encryption processor 43 which encrypts content data (DATA) to be recorded on a recording medium 30 such as an optical disk or the like using the encryption key generated by the encryption key generator 42.

The data playback unit 50 has a ROM 51 which stores data sets with the data structure shown in FIG. 2 or 3, a decryption key generator 52 which generates a decryption key using each data set stored in the ROM 51, and a decryption processor 53 which decrypts encrypted content data (DATA) read from the recording medium 30 using the decryption key generated by the decryption key generator 52.

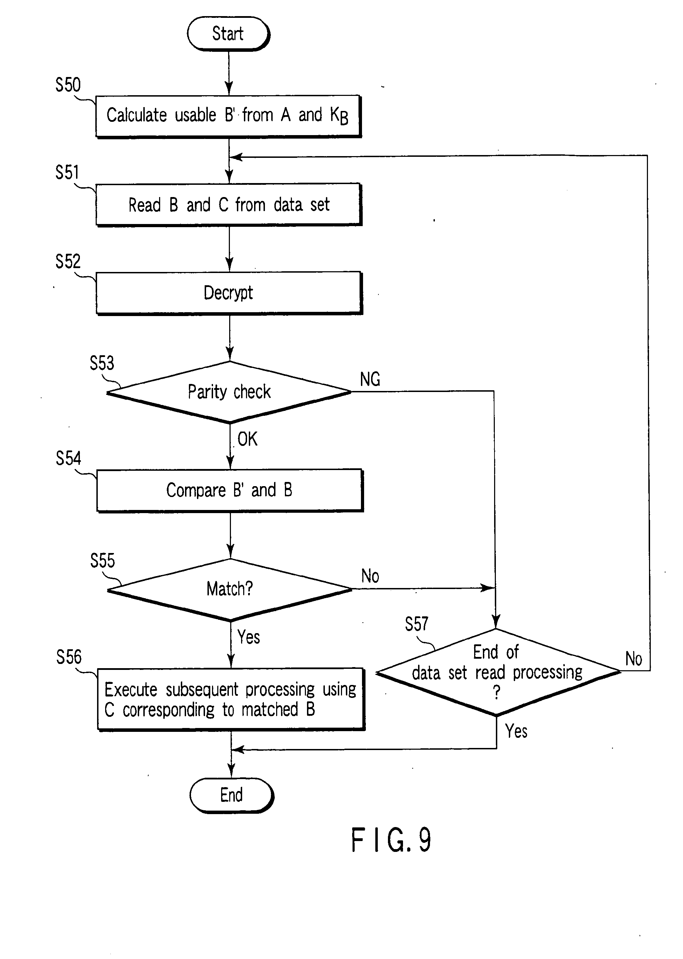

FIG. 9 shows the processing sequence of the data recording unit 40 and the data playback unit 50 with the above arrangement.

The encryption key generator 42 of the data recording unit 40 reads key data K_{B} recorded on the recording medium 30 from it, and calculates data B' corresponding to one data B of the data B group on the basis of this key data K_{B} and data A shown in FIG. 1 (step S50). Then, one data set is read from the ROM 51 (step S51) and is decrypted (step S52), and the decrypted data B and C undergo parity check processing using the decrypted parity data (step S53). If the authenticity of the decoded data B and C is confirmed, i.e., if it is confirmed that data B and C are normally read and decrypted, data B and B' are compared (step S54). If data B and B' match (YES in step S55), the subsequent processing is executed using the decrypted data B and C (steps S56). In this case, an encryption key K_{C} is generated using data C corresponding to data B, and is passed to the encryption processor 43. The encryption processor 43 encrypts content data (DATA) to be recorded on the recording medium 30 using the encryption key K_{C} received from the encryption key generator 42. This encrypted content data (D_{E}) is recorded on the recording medium 30 by a drive (not shown) which drives the recording medium 30.

Upon comparison between the decrypted data B and data B' (step S54), if these data do not match (NO in step S55), the next data set is read from the ROM 51 and the same processing as described above is executed. In this case, if (n+1) data sets have already been read, and data B do not match data B' (NO in step S55), the processing ends without generating any encryption key K_{C} (YES in step S57). On the other hand, if a parity error has occurred (NG in step S53) in the parity check processing (step S53), for example, the read and parity check processes of data B and C are executed again (NO in step S57). If a parity error has occurred again, data B and C are handled as invalid data.

The decryption key generator 52 of the data playback unit 50 reads key data K_{B} recorded on the recording medium 30 from it, and calculates data B' corresponding to one data B of the data B group on the basis of this key data K_{B} and data A shown in FIG. 1 (step S50). Then, one data set is read from the ROM 51 (step S51) and is decrypted (step S52), and the decrypted data B and C undergo parity check processing using the decrypted parity data (step S53). If the authenticity of the decoded data B and C is confirmed, i.e., if it is confirmed that data B and C are normally read and decrypted, data B and B' are compared (step S54). If data B and B' match (YES in step S55), the subsequent processing is executed using the decrypted data B and C (steps S56). In this case, a decryption key K_{D} is generated using data C corresponding to data B, and is passed to the decryption processor 53. The decryption processor 53 decrypts encrypted content data (D_{E}) read from the recording medium 30 using the decryption key K_{D} received from the decryption key generator 52, and outputs the decrypted content data (DATA) to a data playback apparatus (not shown).

In the processing of the decryption key generator 52 as well, upon comparison between the decrypted data B and data B' (step S54), if these data do not match (NO in step S55), the next data set is read from the ROM 51 and the same processing as described above is executed. In this case, if (n+1) data sets have already been read, and data B do not match data B' (NO in step S55), the processing ends without generating any decryption key K_{D} (YES in step S57). On the other hand, if a parity error has occurred (NG in step S53) in the parity check processing (step S53), for example, the read and parity check processes of data B and C are executed again (NO in step S57). If a parity error has occurred again, data B and C are handled as invalid data.

Note that the apparatus which can use data sets according to the present invention is not limited to the aforementioned data recording apparatus and data playback apparatus. Also, the present invention can be applied to various other apparatuses and systems such as a communication apparatus and the like which must keep data secret.

## Claims

1. A data processing apparatus which handles a data set including first data (A), at least one second data (B) calculated from the first data, and third data (C) having an one-to-one correspondence with the second data, **characterized by** comprising:
a parity generation unit (11) configured to generate parity data for the second and third data;
a data set generation unit (12) configured to generate an encrypted data set by encrypting the third data together with the second data and the parity data generated by the parity generation unit using a predetermined encryption algorithm; and
a recording unit (13) configured to record the encrypted data set generated by the data set generation unit.

2. An apparatus according to claim 1, **characterized in that** the data set generation unit generates the encrypted data set using a predetermined number of block sizes having, as a unit, a block size of the encryption algorithm used in the encryption.

3. An apparatus according to claim 2, **characterized in that** the encrypted data set includes a data area and a padding area, and has a data structure in which the encrypted third data is embedded in the data area, and the encrypted second data and parity data are embedded as padding data in the padding area.

4. An apparatus according to claim 3, **characterized in that** the third data is data to be kept secret as an object to be encrypted, the second data is data indispensable to use the third data, and the first data is data indicating a set of the second data.

5. An apparatus according to claim 4, **characterized in that** the third data is key data, and the second data is data indicating coordinates of the key data.

6. An apparatus according to claim 1, **characterized by** further comprising:
a recording medium (24) configured to record the encrypted data set;
a decryption unit (22) configured to decrypt the second and third data and the parity data recorded on the recording medium; and
an inspection unit (22) configured to confirm using the parity data decrypted by the decryption unit if the decrypted second and third data are authentic data.

7. An apparatus according to claim 6, **characterized by** further comprising a processing unit (43, 53) configured to encrypt or decrypt predetermined data using the second and third data which are configured to be authentic by the inspection unit.
